# EUROPÄISCHE PATENTSCHRIFT

(11) **EP 0 937 626 B1**
(45) Veröffentlichungstag und Bekanntmachung des Hinweises auf die Patenterteilung: **21.05.2003**
(21) Anmeldenummer: 99100161.1
(22) Anmeldetag: 07.01.1999
(51) Int. Cl.: B62B 5/06, B62B 3/14

(54) **Schiebegriff für einen Transportwagen**
Handle bar for a hand cart
Piognée pour pousser d'un chariot de transport

(30) Priorität: 21.02.1998 DE 29803064 U
(43) Veröffentlichungstag der Anmeldung: 25.08.1999
(73) Patentinhaber: WANZL METALLWARENFABRIK GMBH, D-89336 Leipheim (DE)
(72) Erfinder: Deyerler, Kurt, 89257 Illertissen (DE)

(56) Entgegenhaltungen:
- EP-A- 0 212 557
- EP-A- 0 713 819
- DE-U- 8 502 781
- DE-U- 8 601 412
- DE-U- 9 317 500

## Beschreibung

Die Erfindung betrifft einen Schiebegriff für einen Transportwagen, der eine Einrichtung zur Aufnahme eines Werbemittels aufweist, wobei ein die Einrichtung verschließendes Abdeckteil vorgesehen ist, das mit Hilfe von an der Einrichtung und am Abdeckteil befindlichen Rastmitteln auf die Einrichtung aufsetzbar ist und wobei das Abdeckteil eine umlaufende Randleiste aufweist, an welcher die Rastmittel des Abdeckteiles angeordnet und als Vertiefungen oder Durchbrüche gestaltet sind.

Das deutsche Gebrauchsmuster G 86 01 412.9 beschreibt ein Informations-Display, das sich an der Griffeinrichtung eines von Hand bewegbaren Transportwagens befestigen lässt und das einen Raum zur Aufnahme eines Informationsträgers, z.B. eines Werbemittels aufweist, wobei der Informationsträger durch ein Sichtfenster nach außen hin abgedeckt ist. Um die zum Austauschen des Informationsträgers aufzuwendende Zeit zu reduzieren, um ferner die dabei erforderlichen Handgriffe zu vermeiden und auch um sicherzustellen, dass zu diesen Zwecken kein Teil vom Informations-Display abgenommen werden muss, wird vorgeschlagen, das Informations-Display mit einem von Hand betätigbaren, lös- und verriegelbaren Gesperre auszustatten, das in Wirkverbindung entweder mit einem verschwenkbaren und federbeaufschlagten Gehäuseabschnitt oder mit einem federbeaufschlagten Schiebeteil steht, wobei in entriegeltem Zustand des Gesperres eine zum Informationsträger gerichtete Öffnung geschaffen ist. Diese Lösung lässt ein Informations-Display entstehen, das aus relativ vielen Bauteilen besteht, so dass die Herstellkosten hoch sind. Dies ist nachteilig und nicht erwünscht.

Zum Stand der Technik zählt auch ein Schiebegriff, der mit der Bezeichnung "Trolleymatic" angeboten wird. Dieser Schiebegriff findet Verwendung bei von Hand bewegbaren Transportwagen, insbesondere bei Einkaufswagen. Der Schiebegriff weist neben einem integrierten Pfandschloss auch eine Einrichtung zur Aufnahme eines Werbemittels auf. Das Werbemittel ist üblicherweise ein papierähnlicher Streifen, auf dem Werbeangaben aufgedruckt sind. Die Einrichtung ist durch ein transparentes Abdeckteil verschließbar. Das Abdeckteil ist Teil eines Strangpressprofiles und kann deshalb in beliebigen Längen vom Strangpressprofil abgeschnitten werden. An beiden Längsseiten des Abdeckteiles ist ein die gesamte Länge des Abdeckteiles beanspruchender, nach unten gerichteter Steg vorgesehen. Der Querschnitt der beiden Stege ist gekrümmt, so dass durch die Stege je eine ebenfalls die Länge des Abdeckteiles beanspruchende Hinterschneidung gebildet ist. Im auf die Einrichtung aufgesetztem Zustand hintergreifen an der Einrichtung befindliche Vorsprünge eine der beiden Hinterschneidungen, während in die andere Hinterschneidung zwei verdrehbare, von unten her erreichbare Halteelemente eingreifen, die aus einer das Abdeckteil sichernden Lage in eine das Abdeckteil freigebende Lage und umgekehrt bewegbar sind. Die Einrichtung zur Aufnahme des Werbemittels ist als Vertiefung gestaltet und weist einen länglichen rechteckigen Grundriss auf. Das Abdeckteil ist etwas länger gestaltet als die Länge der Einrichtung, um im praktischen Einsatz kein Regenwasser zum Werbemittel gelangen zu lassen.
Der Schiebegriff weist zwei entscheidende Nachteile auf. Ein erster Nachteil besteht darin, dass beim Aufsetzen des Abdeckteiles auf die Einrichtung das Abdeckteil relativ stark verbogen werden muss, um das Abdeckteil in eine die Einrichtung von oben her verschließende Lage zu bringen. Ein Verrutschen und/oder eine Beschädigung des in der Einrichtung befindlichen Werbemittels ist durch den beschriebenen Aufsetzvorgang nicht auszuschließen.
Der zweite Nachteil zeigt sich dann, wenn es gilt, Werbemittel auszutauschen. Sind die Schiebegriffe an Einkaufswagen angeordnet, deren Körbe durch rückseitige Klappen verschließbar sind und befinden sich die Klappen in gestapeltem Zustand der Einkaufswagen in nach oben geschwenkter Lage, ist es unmöglich, von unten her an die beiden drehbaren Halteelemente zu gelangen, die das Werbemittel halten. Die Klappen stehen im Weg, so dass Werbemittel nur dann austauschbar sind, wenn die Einkaufswagen sich nicht im Stapelverbund befinden. Ein Austauschen der Werbemittel während eines Geschäftstages ist daher nur in zeitraubender Weise möglich, da die Einkaufswagen von Kunden zum Einkaufen benützt werden und deshalb nicht alle Wagen erreichbar sind. Will man hingegen den Austausch nach der Geschäftszeit eines Marktes vornehmen, müssen die Einkaufswagen aus dem Stapelverbund heraus vereinzelt werden. Dies ist ebenfalls umständlich.

Die Aufgabe der Erfindung besteht darin, einen Schiebegriff der hier vorliegenden Art so weiterzuentwickeln, dass die eben genannten Nachteile vermieden werden.

Die Lösung der Aufgabe besteht darin, dass die Rastmittel der Einrichtung durch federnde Rastzungen gebildet und zum Eingreifen in die Vertiefungen oder Durchbrüche des Abdeckteiles bestimmt sind und dass die Intensität der Verrastung der Rastzungen mit den Vertiefungen oder Durchbrüchen so gewählt ist, dass das Abdeckteil mit Hilfe von Saugnäpfen von der Einrichtung abnehmbar ist.

Durch das Anformen einer umlaufenden Randleiste erhält das Abdeckteil eine stabile, wannenförmige Form, wobei das Abdeckteil mit der Randleiste voraus auf oder in die Einrichtung aufgesetzt bzw. eingefügt und dort mit den Rastmitteln verrastet wird. Ein Verbiegen oder Verwinden des Abdeckteiles unterbleibt bei diesem Vorgang. Das Werbemittel verrutscht nicht. Es wird auch nicht beschädigt Da die am Abdeckteil befindlichen Rastmittel als Vertiefungen oder Ausnehmungen gestaltet sind, weicht beim Aufsetzvorgang nicht die Randleiste aus, sondern die an der Einrichtung angeordneten Rastzungen.
Durch einfaches Aufsetzen des Abdeckteiles auf die Einrichtung wird das Werbemittel in seiner Lage gehalten und das Abdeckteil arretiert. Es sind hierzu keine weiteren Teile oder Hilfsmittel erforderlich, so dass eine kostengünstige Herstellung des Schiebegriffes möglich ist.

Die Erfindung wird anhand eines Ausführungsbeispieles näher erläutert Es zeigt
- Fig. 1: einen Schiebegriff, der an einem Transportwagen in Form eines Einkaufswagens montiert ist;
- Fig. 2: eine Ansicht von unten in das Abdeckteil sowie
- Fig. 3: einen Schnitt durch die Einrichtung mit Werbemittel und darüber angeordnetem Abdeckteil.

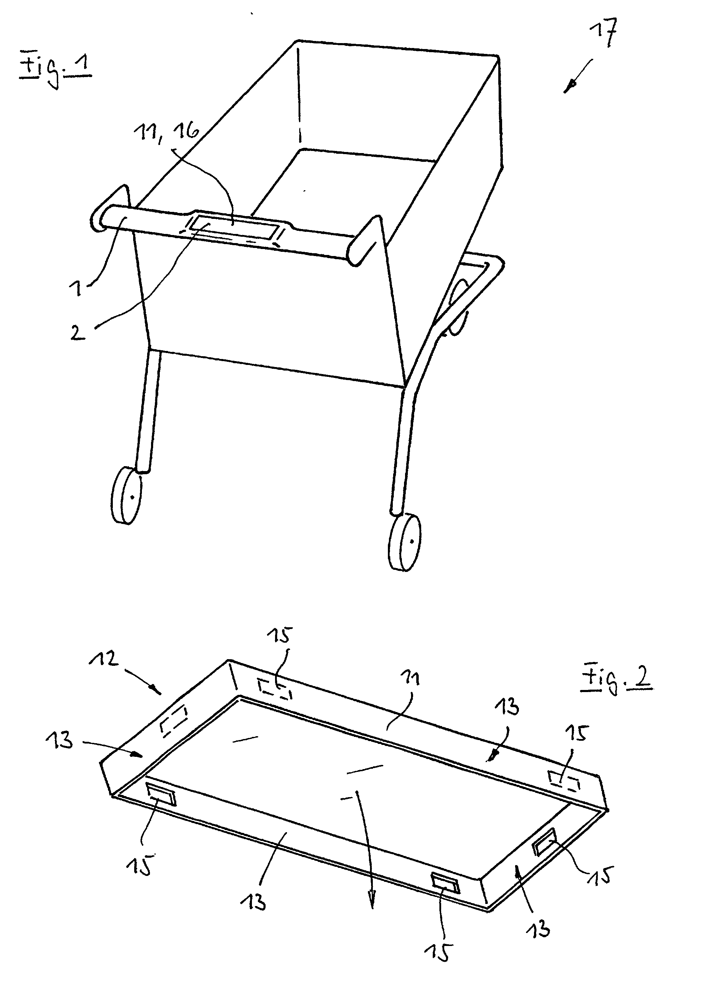

Der in Fig. 1 dargestellte Schiebegriff 1 ist an einem als Einkaufswagen gestalteten Transportwagen 17 montiert. Der Schiebegriff 1 ist als Kunststoffteil gestaltet und weist neben Griffabschnitten eine durch ein Abdeckteil 11 verschließbare Einrichtung 2 auf, die zur Aufnahme eines Werbemittels 16 bestimmt ist. Am Schiebegriff 1 können noch weitere zweckmäßige Vorrichtungen angeordnet sein. So ist es beispielsweise üblich, den Schiebegriff 1 mit einem nicht näher dargestellten Pfandsschloss auszustatten, das ein Ankoppeln des Transportwagens 17 an einen weiteren Transportwagen 17 erlaubt. Das Einsetzen eines Transponders ist ebenso möglich wie die Ausstattung des Schiebegriffes 1 mit einer Zettelklemme. Die Einrichtung 2 ist als eine Art Vertiefung gestaltet, die einen rechteckigen Grundriss aufweist. Ein Abdeckteil 11 verschließt in lösbarer Weise die Einrichtung 2.

Fig. 2 zeigt das von oben auf die Einrichtung 2 aufsetzbare Abdeckteil 11. Man sieht von unten in das aus transparentem Kunststoff gefertigte Abdeckteil 11. Das Abdeckteil 11 weist nahezu den gleichen Grundriß auf wie die Einrichtung 2. An den gewöhnlich ebenen plattenförmigen Rücken 12 schließt eine umlaufende, den Rücken 12 nach allen Seiten begrenzende Randleiste 13 an, die nach unten gerichtet ist. In der Randleiste 13 sind Rastmittel in Form von in Abständen angeordneten Vertiefungen oder Durchbrüchen 15 vorgesehen. Das Abdeckteil 11 ist wie eine Wanne gestaltet, die mit ihrer offenen Seite nach unten weist.

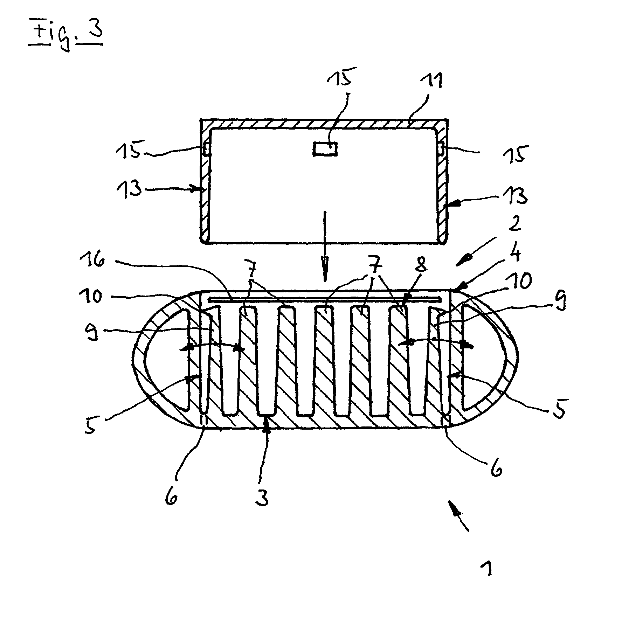

In einem Schnitt quer zur Längsrichtung des Schiebegriffes 1 zeigt Fig. 3 die Einrichtung 2. Sie ist als Vertiefung gestaltet, von deren Boden 3 sich nach oben gerichtete Stege 7 erstrecken, auf deren oberer Begrenzung 8 ein streifenförmiges Werbemittel 16 liegt. Die beiden äußersten im Bild gezeigten Stege 7 sind als federnde Rastzungen 9 gestaltet. Die Rastzungen 9 sind, ebenso wie die Vertiefungen oder Durchbrüche 15, geeignete Rastmittel, die sich in der Einrichtung 2 und damit am Schiebegriff 1 befinden. Die Zeichnung zeigt, wie das Abdeckteil 11 auf die Einrichtung 2 aufgesetzt wird. Die Randleiste 13 weist nach unten und befindet sich in aufgesetztem Zustand des Abdeckteiles 11 zwischen den Rastzungen 9 und der die Einrichtung 2 begrenzenden Wandung 5. Beim Aufsetzvorgang greifen die Rastzungen 9 mit Vorsprüngen 10 in die Vertiefungen oder Durchbrüche 15 des Abdeckteiles 11 ein. Das Abdeckteil 11 ist mit der Einrichtung 2 und damit mit der Schiebeeinrichtung 1 so verrastet, dass es ohne zusätzliche Hilfsmittel von Hand nicht lösbar ist, weil es auch nach oben allseits bündig mit dem oberen Rand 4 der Einrichtung 2 abschließt. Das Abdeckteil 11 ist so bemessen, daß zwischen der umlaufenden Randleiste 13 und der umlaufenden Wandung 5 der Einrichtung 2 nur ein äußerst geringer, ja gegen Null gehender Spalt gebildet ist. Eindringendes Regenwasser sickert an den Außenwänden 14 der Randleiste 13 nach unten und fließt durch Öffnungen 6, die sich am Boden 3 der Einrichtung 2 befinden, nach unten aus dem Schiebegriff 1 ab. Da das Werbemittel 16 auf den Stegen 7 aufliegt, kann kein Regenwasser zum Werbemittel 16 gelangen, das sich schädlich auf das Werbemittel 16 auswirken könnte.
Wie eingangs erwähnt, kann das Abdeckteil 11 unter Inanspruchnahme von Saugnäpfen und unter Aufbietung einer gewissen Kraft nach oben von der Einrichtung 2 weggezogen werden. Die Vorsprünge 10 an den Rastungen 9 sind dabei so gestaltet, dass sie ab einer bestimmten, von den Saugnäpfen übertragenen Zugkraft, aus den Vertiefungen oder Durchbrüchen 15 herausspringen, so dass das Abdeckteil 11 abgehoben werden kann.

## Patentansprüche

1. Schiebegriff (1) für einen Transportwagen (17), der eine Einrichtung (2) zur Aufnahme eines Werbemittels (16) aufweist, wobei ein die Einrichtung (2) verschließendes Abdeckteil (11) vorgesehen ist, das mit Hilfe von an der Einrichtung (2) und am Abdeckteil (11) befindlichen Rastmitteln auf die Einrichtung (2) aufsetzbar ist und wobei das Abdeckteil (11) eine umlaufende Randleiste (13) aufweist, an welcher die Rastmittel des Abdeckteiles (11) angeordnet und als Vertiefungen oder Durchbrüche (15) gestaltet sind, **dadurch gekennzeichnet, dass** die Rastmittel der Einrichtung (2) durch federnde Rastzungen (9) gebildet und zum Eingreifen in die Vertiefungen oder Durchbrüche (15) des Abdeckteiles (11) bestimmt sind und dass die Intensität der Verrastung der Rastzungen (9) mit den Vertiefungen oder Durchbrüchen (15) so gewählt ist, dass das Abdeckteil (11) mit Hilfe von Saugnäpfen von der Einrichtung (2) abnehmbar ist.

2. Schiebegriff nach Anspruch 1, **dadurch gekennzeichnet, dass** sich vom Boden (3) der Einrichtung (2) Stege (7) nach oben erstrecken, auf welchen das Werbemittel (16) aufliegt.

3. Schiebegriff nach Anspruch 1 oder 2, **dadurch gekennzeichnet, dass** die Randleiste (13) nach unten gerichtet ist.

4. Schiebegriff nach einem der Ansprüche 1 bis 3, **dadurch gekennzeichnet, dass** sich in aufgesetztem Zustand des Abdeckteiles (11) die Randleiste (13) zwischen den Rastzungen (9) und der die Einrichtung (2) begrenzenden Wandung (5) befindet.

5. Schiebegriff nach einem der Ansprüche 1 bis 4, **dadurch gekennzeichnet, dass** an den Rastzungen (9) Vorsprünge (10) angeordnet sind und dass die Vorsprünge (10) in die Vertiefungen oder Durchbrüche (15) greifen.

6. Schiebegriff nach einem der Ansprüche 1 bis 5, **dadurch gekennzeichnet, dass** das Abdeckteil (11) allseits bündig mit dem oberen Rand (4) der Einrichtung (2) abschließt.

## Claims

1. A handlebar (1) for a trolley (17), comprising a device (2) for receiving an advertising medium (16), wherein a cover part (11) closing the device (2) is provided and is attachable to the device (2) by locking means provided on the device (2) and the cover part (11), and wherein the cover part (11) has a circumferential edge strip (13) in which the locking means of the cover part (11) are arranged and formed as recesses or openings (15), **characterised in that** the locking means of the device (2) are formed by resilient locking tongues (9) and are intended to engage in the recesses or openings (15) in the cover part (11), and **in that** the engagement force between the locking tongues (9) and the recesses or openings (15) is selected so that the cover part (11) is removable from the device (2) by means of suction cups.

2. A handlebar according to claim 1, **characterised in that** ribs (7), on which the advertising means (16) rests, extend upwards from the bottom (3) of the device (2).

3. A handlebar according to claim 1 or 2, **characterised in that** the edge strip (13) extends downwards.

4. A handlebar according to any one of claims 1 to 3, **characterised in that** the edge strip (13) is located between the locking tongues (9) and the wall (5) bounding the device (2) when the cover part (11) is attached.

5. A handlebar according to any one of claims 1 to 4, **characterised in that** projections (10) are arranged on the locking tongues (9) and **in that** the projections (10) engage in the recesses or openings (15).

6. A handlebar according to any one of claims 1 to 5, **characterised in that** the cover part (11) ends flush with the upper edge (4) of the device (2) on all sides.

## Revendications

1. Barre de poussée (1) pour un chariot de transport (17), munie d'un dispositif (2) conçu pour recevoir un moyen publicitaire (16), barre dans laquelle est prévue une pièce de recouvrement (11) qui obture le dispositif (2), et peut être mise en place sur ledit dispositif (2) à l'aide de moyens d'encliquetage situés sur ledit dispositif (2) et sur ladite pièce de recouvrement (11) ; et dans laquelle la pièce de recouvrement (11) présente une barrette marginale périphérique (13) sur laquelle les moyens d'encliquetage de ladite pièce de recouvrement (11) sont disposés, et configurés en des creusures ou perforations (15), **caractérisée par le fait que** les moyens d'encliquetage du dispositif (2) sont formés par des languettes encliquetables élastiques (9), et sont destinés à pénétrer dans les creusures ou perforations (15) de la pièce de recouvrement (11) ; et **par le fait que** l'intensité de la solidarisation encliquetée, entre les languettes encliquetables (9) et les creusures ou perforations (15), est choisie de telle sorte que la pièce de recouvrement (11) puisse être dissociée d'avec le dispositif (2) à l'aide de ventouses.

2. Barre de poussée selon la revendication **1, caractérisée par le fait que** des membrures (7), sur lesquelles le moyen publicitaire (16) repose, s'étendent vers le haut à partir du fond (3) du dispositif (2).

3. Barre de poussée selon la revendication 1 ou 2, **caractérisée par le fait que** la barrette marginale (13) est dirigée vers le bas.

4. Barre de poussée selon l'une des revendications 1 à 3, **caractérisée par le fait que**, lorsque la pièce de recouvrement (11) est mise en place, la barrette marginale (13) se trouve entre les languettes encliquetables (9) et la paroi (5) délimitant le dispositif (2).

5. Barre de poussée selon l'une des revendications 1 à 4, **caractérisée par le fait que** des ergots (10) sont disposés sur les languettes encliquetables (9) ; et **par le fait que** lesdits ergots (10) pénètrent dans les creusures ou perforations (15).

6. Barre de poussée selon l'une des revendications I à 5, **caractérisée par le fait que** la pièce de recouvrement (11) vient à fleur, de tous côtés, avec le bord supérieur (4) du dispositif (2).
